# DEMANDE DE BREVET EUROPEEN

(11) **EP 1 266 880 A1**
(43) Date de publication de la demande: **18.12.2002**
(21) Numéro de dépôt: 02291437.8
(22) Date de dépôt: 11.06.2002
(51) Int. Cl.: C05F 3/00, A01C 3/02

(54) **Module et installation modulaire pour le traitement de déchets organiques et procédé de fabrication dudit module.**

(30) Priorité: 15.06.2001 FR 0107896; 11.02.2002 FR 0201606
(71) Demandeur: I.D.'O Concept, 85600 bouffere (FR)
(72) Inventeur: Mechineau, Claude, 85600 Bouffere (FR); Limousin, Emmanuel, 44190 Saint-Hilaire de Clisson (FR)
(74) Mandataire: Laget, Jean-Loup

(57) **Abrégé**

L'invention concerne un module pour la réalisation d'une installation de traitement de déchets organiques par fermentation aérobie.

Ce module est caractérisé en ce que le module affecte la forme d'un bac (1) à extrémités (5) ouvertes dont le fond (2) est muni d'au moins un, de préférence une pluralité de, conduits (6) longitudinaux débouchant à la surface intérieure de la paroi de fond (2) du bac (1) sous forme d'une fente (12) longitudinale continue pour libérer de l'air sous pression introduit dans les conduits (6) à partir d'un dispositif (10, 11) de production d'air sous pression.

Application : production de fertilisant ou d'amendement des sols.

## Description

La présente invention concerne un module pour la réalisation d'une installation de traitement de déchets organiques, tels que lisier, déchet de litière, fumier, par fermentation aérobie en vue de la production notamment de fertilisant ou d'amendement des sols ainsi qu'une installation constituée d'un module unique ou d'un assemblage de modules du type précité et un procédé de fabrication d'un tel module.

Les installations de traitement de déchets organiques par fermentation aérobie sont jusqu'à présent des installations onéreuses nécessitant une cuve de brassage généralement posée sur une plate-forme. Ce brassage nécessite une main d'oeuvre importante qui procède régulièrement à des retournements de la matière en décomposition. Cette technique est soumise aux aléas des conditions climatiques.

On connaît également des installations dans lesquelles des moyens d'aération doivent être repositionnés après chaque cycle de fermentation. Du fait de leur incorporation dans le tas de déchets à traiter, il en résulte une usure importante des moyens d'aération et une perte de temps en manipulations.

On connaît par ailleurs, à travers le document EP-A-0.795.527, une construction d'un plancher pour la réalisation d'un tunnel de compostage. Ce plancher est constitué de deux éléments préfabriqués. Ces éléments préfabriqués affectent la forme de dalles constituées l'une de conduits longitudinaux traversants, l'autre de rainures. Le fond des rainures de la dalle du dessus et les conduits de la dalle du dessous communiquent entre eux par des conduits radiaux réalisés au moyen de pièces préfabriquées, généralement en plastique, insérées par exemple lors du coulage du béton desdites dalles. En conséquence, les conduits longitudinaux ménagés dans l'une des dalles ne débouche pas directement à la surface de la paroi de fond du bac. Ils nécessitent la présence de conduits radiaux réalisés sous forme de pièces préfabriquées, ces conduits radiaux débouchant ponctuellement à la surface de la paroi de fond du bac. De telles installations présentent divers inconvénients. La présence de rainures à la surface de la dalle du dessus empêche un vidage total du contenu dudit plancher, en particulier lors de l'utilisation d'un épandeur à fumier. En effet, la matière tend à rester logée à l'intérieur desdites rainures. Par ailleurs, l'utilisation de conduits débouchant ponctuellement à la surface formant fond du bac augmente les risques de colmatage de telles ouvertures. Enfin, les matières peuvent tendre à pénétrer à travers ces ouvertures dans les conduits longitudinaux de l'entre-dalles. Du fait de la conception de l'ensemble, il devient difficile, voire impossible, de procéder à un nettoyage de ces conduits, en particulier lorsque de telles installations présentent plusieurs dizaines de mètres de longueur.

On connaît par ailleurs, à travers le document allemand DE-A-3.907.751, un bac réalisé de préférence en béton dont le fond est pourvu de conduits débouchant ponctuellement sous forme d'ouvertures discontinues à la surface intérieure du fond du bac. A nouveau, ces ouvertures ponctuelles présentent un risque de colmatage important. Par ailleurs, il devient à nouveau impossible, dans le cas de constructions de grande longueur, de procéder à un nettoyage de ces conduits qui peuvent être souillés rapidement par introduction de matières à l'intérieur desdites ouvertures.

On connaît enfin, par le document allemand DE-A-3.631.010, une aire constituée par assemblage de pierres comportant des conduits destinés à former, après assemblage, un conduit longitudinal, apte à déboucher dans la surface intérieure formant fond du bac. Toutefois, la réalisation d'une telle installation, ne se présentant pas sous forme d'un élément préfabriqué, est longue et fastidieuse. Elle nécessite l'assemblage de différentes pierres destinées à former, à l'état assemblé, une dalle. En conséquence, une telle construction ne peut s'apparenter à un élément sous forme de bac préfabriqué. Par ailleurs, à nouveau, il est nécessaire de disposer de conduits verticaux amenant un fluide gazeux, depuis le conduit longitudinal, jusqu'à la surface intérieure du fond du bac. Les problèmes de nettoyage de tels conduits subsistent.

Un but de la présente invention est de proposer un module et une installation pour le traitement de déchets organiques, de faible coût de construction et de fonctionnement et de maintenance aisée, l'efficacité de cette installation étant indépendante des conditions météorologiques et étant sans effet négatif sur l'environnement.

Un autre but de l'invention est de proposer un module et une installation pour le traitement de déchets organiques dont les conceptions permettent de limiter voire de s'affranchir de tout consommable.

Un autre but de l'invention est de proposer un module et une installation modulaire pour le traitement de déchets organiques fonctionnant par voie aérobie par alimentation en air forcé par le dessous du tas de déchets.

Un autre but de l'invention est de proposer un module et une installation pour le traitement de déchets organiques dont les conceptions permettent le traitement de déchets à des taux d'humidité variables, voire élevés, tels que le lisier, sans ruissellement hors de l'installation et sans dégagement d'odeur dû à la présence de bactéries anaérobies.

Un autre but de l'invention est de proposer un module et une installation pour le traitement de déchets organiques dont les conceptions permettent d'une part le chargement et/ou le déchargement en déchets de l'installation au moyen d'un simple épandeur à fumier en poste fixe et télescopique, d'autre part l'absence de création de chemins de circulation d'air préférentiels sans nuire à la facilité de nettoyage de telles installations.

A cet effet, l'invention a pour objet un module pour la réalisation d'une installation de traitement de déchets organiques, tels que lisier, déchet de litière, fumier, par fermentation aérobie en vue de la production notamment de fertilisant ou d'amendement des sols, caractérisé en ce que le module affecte la forme d'un bac préfabriqué à extrémités ouvertes dont le fond est muni d'au moins un, de préférence une pluralité de, conduits longitudinaux débouchant respectivement à la surface intérieure de la paroi de fond du bac sous forme d'une fente longitudinale continue pour libérer de l'air sous pression introduit dans les conduits à partir d'un dispositif de production d'air sous pression.

La présence de conduits longitudinaux ouverts le long d'une fente longitudinale continue débouchant directement dans l'espace du bac et ménagés dans la matière constitutive de la face formant fond du module permet de procéder à une aération forcée par le dessous de la matière contenue dans le module, ce qui permet d'assurer une décomposition dans des conditions optimales de ladite matière. Ces conduits forment ainsi un ensemble monobloc avec le fond du moule simplifiant la fabrication de l'ensemble. Il en résulte également une facilité de nettoyage des conduits après chaque cycle de fermentation, un simple jet d'eau étant nécessaire au nettoyage. Enfin, la disposition des conduits longitudinaux dans la face formant fond du module et débouchant généralement en affleurement de la surface de la face formant fond permet d'éviter tout endommagement de ces derniers. Par ailleurs, le fond du bac demeure plan de telle sorte que son vidage est facilité.

Selon une forme de réalisation préférée de l'invention, le ou chaque conduit longitudinal loge un conduit apte à être alimenté en air sous pression par le dispositif de production d'air sous pression, ce conduit étant muni d'ouvertures telles que des perforations ou des fentes, dont au moins une partie sont orientées en direction de la paroi de fond du bac, notamment pour libérer l'air sous pression introduit dans le conduit à partir du dispositif de production d'air sous pression.

Une telle conception s'applique plus particulièrement au traitement de déchets tels que fumier dont le taux d'humidité est relativement faible. Cette solution permet une mise en oeuvre aisée du conduit d'injection d'air simplement enfilé à l'intérieur du conduit ménagé dans le fond du bac, le conduit ménagé à l'intérieur du fond du bac servant d'élément de protection au conduit d'injection d'air, en particulier lors du chargement ou du déchargement du bac.

Dans un mode de réalisation particulier de l'invention, chaque conduit logé à l'intérieur d'un conduit longitudinal constitue un drain filtrant apte à être alimenté en air sous pression par le dispositif de production d'air sous pression, ce drain servant indifféremment de conduit d'écoulement généralement gravitaire des liquides, tels que des jus, issus des déchets organiques à traiter, ou de conduit de circulation d'air sous pression.

Une telle conception permet le traitement de déchets à fort taux d'humidité tels que le lisier avec récupération des ruissellements sans rejet dans l'environnement. Par ailleurs, le nettoyage d'un tel module demeure particulièrement aisé et peut être effectué notamment au jet d'eau ou au moyen d'un dispositif de projection d'eau sous pression.

L'invention a encore pour objet une installation pour le traitement de déchets organiques, tels que lisier, déchet de litière, fumier, par fermentation aérobie en vue de la production notamment de fertilisant ou d'amendement des sols, caractérisée en ce qu'elle est constituée au moins d'un module du type précité et d'un dispositif de production d'air sous pression.

L'invention a encore pour objet une installation pour le traitement de déchets organiques, tels que lisier, déchet de litière, fumier, par fermentation aérobie en vue de la production notamment de fertilisant ou d'amendement des sols, caractérisée en ce qu'elle est constituée au moins par assemblage d'une pluralité de modules du type précité, le ou les conduits longitudinaux de chaque module étant alignés avec le ou les conduits longitudinaux de module(s) adjacent(s) pour former une continuité du ou des conduits longitudinaux dans un ensemble de modules et assurer, dans un ensemble de modules, la continuité de distribution d'air injecté par un dispositif de production d'air sous pression.

L'invention a encore pour objet un procédé de fabrication d'un module du type précité, ce module affectant la forme d'un bac à extrémités ouvertes, caractérisé en ce qu'on dispose des conduits en fond d'un moule correspondant à la forme du bac de module à réaliser, en ce que l'on enrobe partiellement lesdits conduits de la matière constitutive du bac, telle que du béton, en ce qu'on arase, après démoulage, les conduits en leur partie débordante de la face formant fond du bac pour obtenir une fente longitudinale continue.

L'invention sera bien comprise à la lecture de la description suivante d'exemples de réalisation, en référence aux dessins annexés dans lesquels :

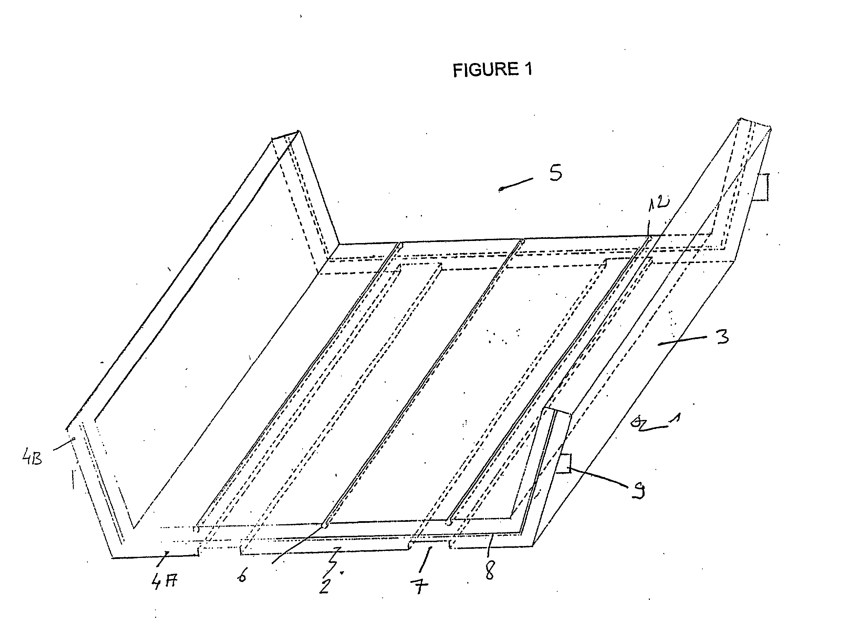

la figure 1 représente une vue en coupe partiellement en transparence d'un module conforme à l'invention ;

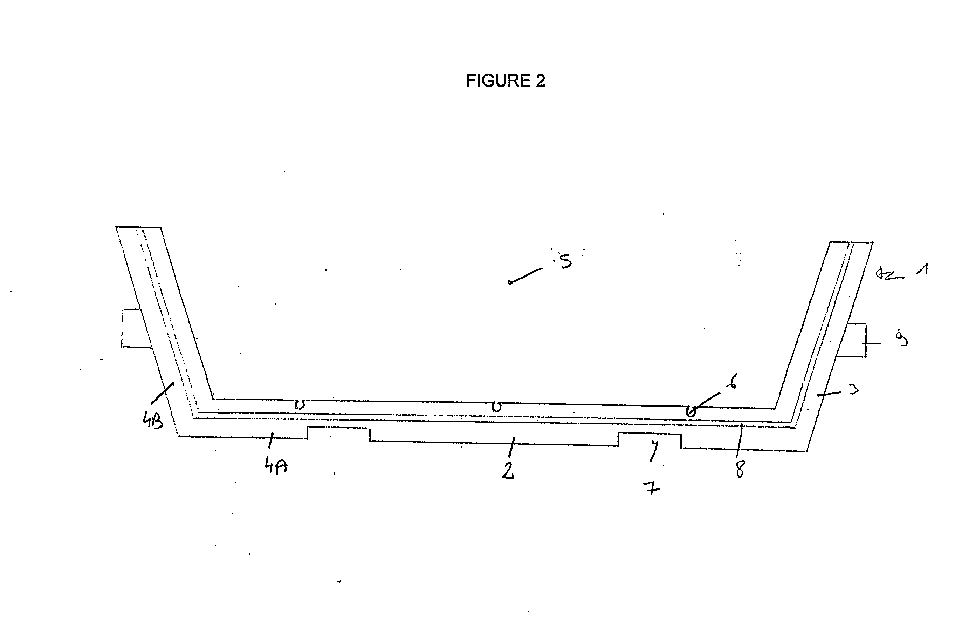

la figure 2 représente une vue en coupe du module de la figure 1 ;
la figure 3 représente une vue schématique de dessus d'une installation constituée de trois modules assemblés et reliés à un collecteur et
la figure 4 représente une vue schématique de dessus du réseau de circulation des fluides.

Comme mentionné ci-dessus, le module et l'installation de l'invention ont pour objet le traitement de déchets organiques, tels que lisier, déchet de litière, fumier, par fermentation aérobie en vue de la production notamment de fertilisant ou d'amendement des sols. Le principe de la fermentation aérobie repose ici sur le mélange de déchets organiques tels que du fumier présents sur le site et riches en azote avec un autre intrant riche en carbone. L'objectif est d'obtenir une composition à l'intérieur du module présentant un rapport C/N compris entre 20 et 40, de préférence voisin de 30, pour permettre une activité microbienne optimale. Cette source carbonée pourra être constituée par les déchets verts des ordures ménagères, de la paille ou de la sciure de bois. Le mélange déchets organiques/produits carbonés pourra être, en fonction de la conception de chacun des éléments du mélange, broyé et si besoin humidifié. Le broyage et l'humidification pourront se faire in situ dans l'installation.

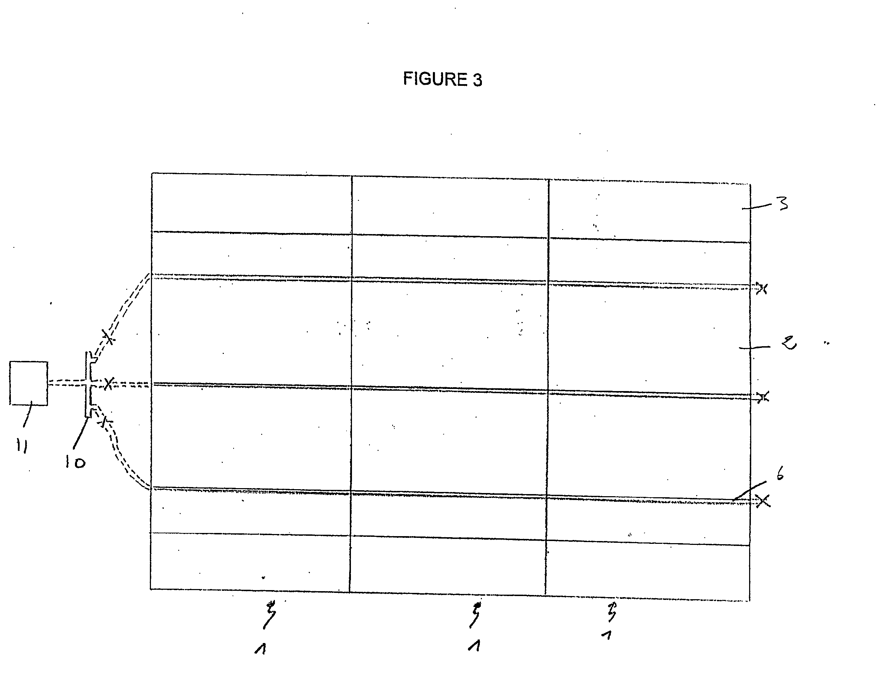

L'installation est, quant à elle, une structure légère nécessitant peu de frais d'infrastructure. Cette installation est constituée d'un dispositif de production d'air sous pression et d'un ou plusieurs modules. Chaque module affecte la forme d'un bac 1 à extrémités 5 ouvertes et dont le fond 2 est muni d'une pluralité de conduits 6 longitudinaux ou canaux ménagés ou enrobés dans la matière constitutive de la face formant fond du bac et débouchant à la surface intérieure de la paroi de fond 2 du bac 1 sous forme d'une fente 12 longitudinale continue pour libérer de l'air sous pression introduit dans les conduits 6 à partir d'un dispositif extérieur ou externe constitué d'un collecteur 10 extérieur comme l'illustre la figure 3, ce collecteur 10 étant lui-même relié à une installation externe de production d'air sous pression tel qu'un ventilateur 11, une soufflerie ou une turbine. A titre d'exemple de soufflerie, on peut utiliser une soufflerie à canal latéral incorporant un moteur triphasé de 6,5 KW alimenté en 400-690 Volts 50 Hertz. Les conduits 6 tels que décrits ci-dessus forment donc, avec le fond du bac 1, un ensemble monobloc réalisé lors de la fabrication du bac.

De manière générale, chaque module affecte, dans les exemples représentés, la forme d'un bac constitué d'une face de fond 2 jouxtée de parois ou faces 3 latérales, ces parois 3 latérales du module étant inclinées, par rapport à la paroi de fond 2, d'un angle compris de préférence dans la plage [100 - 150] degrés pour autoriser un gerbage de modules similaires ou identiques. Chaque module est généralement une pièce moulée préfabriquée, telle qu'une pièce en béton.

Selon la conception des conduits 6 longitudinaux, les modules peuvent affecter différentes formes.

Il est à noter que, pour la fabrication de chaque module, plusieurs méthodes peuvent être retenues.

Une première méthode consiste à disposer des conduits au fond du moule correspondant à la forme du bac du module à réaliser. On enrobe partiellement de la matière constitutive du bac les conduits et on arase après démoulage les conduits en leur partie débordante de la face formant fond 2 du bac pour obtenir une fente 12 de distribution d'air longitudinale continue. Chaque conduit longitudinal comporte alors une fente 12 de distribution d'air longitudinale continue.

Dans un autre mode de fabrication, on dispose au fond du moule des inserts se présentant sous forme d'éléments tubulaires fendus longitudinalement et correspondant à la forme du conduit à ménager dans la face formant fond du bac du module à réaliser. Ces inserts sont perdus après démoulage de manière à former les conduits 6 longitudinaux à fente 12 dans la face formant fond du bac.

Ainsi, dans les deux cas ci-dessus, chaque conduit 6 longitudinal est muni intérieurement d'un revêtement en matière synthétique constitué d'un insert tubulaire perdu lors de la fabrication par moulage du bac 1. Ce revêtement intérieur facilite le nettoyage desdits conduits 6.

Dans encore un autre mode de fabrication du module, les inserts sont supprimés, le moule étant directement conformé pour permettre la réalisation de conduits 6 longitudinaux ou canaux à fente 12 dans la face formant fond du bac.

Pour faciliter l'assemblage de modules entre eux et obtenir d'une part une continuité de distribution d'air injecté, d'autre part une étanchéité de l'installation empêchant toute pénétration dans le sol du contenu de l'installation à la suite de fuites, les chants 4A, 4B d'extrémité du fond 2 et des parois latérales 3, aptes à former un plan de joint à l'état assemblé de deux modules contigus, peuvent comporter une rainure 8 pour la mise en place d'un joint d'étanchéité. En d'autres termes, les faces frontales des parois latérales 3 et de la face 2 formant fond du bac 1 sont munies d'une rainure 8 d'étanchéité. Ainsi, les chants 4A, 4B d'extrémité de deux modules adjacents sont destinés à venir s'appliquer l'un contre l'autre par contact d'appui lors de la mise en place côte à côte desdits modules pour former un bac étanche.

Dans un autre mode de réalisation non représenté, les chants 4A, 4B d'extrémité du fond 2 du bac 1, aptes à former un plan de joint à l'état assemblé de deux modules contigus, présentent, d'une extrémité à une autre, un profil géométrique complémentaire autorisant un assemblage par engagement positif de formes géométriques complémentaires.

Ainsi, l'un des chants d'extrémité d'un bac peut présenter un profil mâle, l'autre un profil femelle de forme géométrique complémentaire au profil mâle pour permettre un assemblage par emboîtement. Cet assemblage est complété par l'utilisation d'un mastic. Une fois cette mise en place effectuée, les parois 3 latérales jouxtant la paroi formant fond 2 du module sont munies d'éléments 9 de serrage, tels que des platines sensiblement en forme de L, pour l'assemblage par serrage de deux modules contigus. Enfin, la paroi de fond 2 du module peut comporter des tunnels 7 ou des pieds pour le passage de fourche d'engin de manutention. Il en résulte une facilité de manipulation et de mise en place d'une telle installation.

Dans un mode de réalisation préféré de l'invention, les conduits 6 longitudinaux sont utilisés comme logement de réception de conduits d'alimentation en air du contenu du bac. Deux modes de réalisation peuvent ainsi être retenus. Ainsi, le ou chaque conduit 6 longitudinal peut loger un drain 6A filtrant apte à être alimenté en air sous pression par le dispositif 11 de production d'air sous pression, ce drain 6A servant indifféremment de conduit d'écoulement, généralement gravitaire de liquides, tels que des jus, issus des déchets organiques à traiter ou de conduit de circulation d'air sous pression. Ce drain peut ainsi affecter la forme d'un élément tubulaire formé par enroulement hélicoïdal d'un fil généralement métallique sur une armature, la zone entre spires de l'enroulement correspondant d'une part à la zone de filtration du drain, d'autre part à la zone de passage d'air. Un tel drain, encore appelé crépine, est notamment commercialisé par la Société Interslot. Ce drain 6A peut, de manière similaire, affecter la forme d'un élément tubulaire formé d'une pluralité d'anneaux métalliques maintenus alignés par une armature, la zone entre anneaux correspondant d'une part à la zone de filtration du drain, d'autre part à la zone de passage d'air. Dans le cas d'une installation constituée d'un ou plusieurs modules, le drain 6A ainsi introduit généralement en l'enfilant à l'intérieur du conduit 6 formé par un ou plusieurs modules assemblés est raccordé à une de ses extrémités au dispositif 11 de production d'air sous pression. La pièce de raccordement peut affecter un grand nombre de formes. Ce drain est encore muni, à ou au voisinage de chacune de ses extrémités, d'organes 16 d'obturation, tels que des électrovannes, sélectivement activables. Le drain 6A est encore raccordé, à son extrémité opposée à celle raccordée au dispositif 11 de production d'air sous pression, à un bac 13 de collecte des jus. Ces jus pourront éventuellement être réintégrés à l'intérieur du module 1 par le dessus en étant projetés à la surface du contenu du bac du module ou bien être éliminés et retraités par une installation appropriée. Ce type d'installation est plus particulièrement approprié pour le traitement de lisier dans lequel le taux d'humidité est particulièrement important.

L'installation peut encore comporter une unité de pilotage commandant le fonctionnement du dispositif 11 de production d'air sous pression et éventuellement le fonctionnement des organes 16 d'obturation. Cette installation comporte encore au moins une sonde de température et éventuellement d'autres dispositifs de contrôle de paramètres, tels que l'humidité et la quantité de matière carbonée ajoutée. Il est ainsi possible d'asservir le débit d'air sous pression introduit à l'intérieur de l'installation à la température régnant à l'intérieur de l'installation une fois les modules recouverts d'une bâche. Ainsi, dans le cas d'une application au traitement de lisier, les cycles d'une fermentation peuvent être réalisés tels que suit. Pendant un premier cycle, au cours duquel le lisier présente un taux de matière sèche voisin de 10 %, toutes les électrovannes 16 disposées au voisinage de l'extrémité du drain 6A raccordée au dispositif 11 de projection d'air sous pression sont fermées alors que les électrovannes 16 disposées à l'extrémité opposée sont ouvertes. Ceci permet un écoulement des jus qui s'effectue généralement par écoulement gravitaire. Il est également possible d'ouvrir les électrovannes 16 positionnées au voisinage du dispositif 11 de projection d'air sous pression pour assurer un écoulement par soufflage des jus. A l'issue de ce premier cycle, pour éviter tout colmatage du drain 6A, par collage de la matière autour du drain, on procède à un second cycle dans lequel les électrovannes 16 positionnées au voisinage du dispositif 11 de production d'air sous pression sont ouvertes, tandis que les électrovannes 16 positionnées à l'extrémité opposée du drain 6A sont fermées. Il en résulte ainsi un décolmatage du drain 6A. Cette alternance des deux cycles est ainsi poursuivie jusqu'à obtenir un lisier avec un taux en matière sèche proche de 25 %. Un troisième cycle peut alors commencer. Ce cycle permet l'assèchement du lisier. Dans ce troisième cycle, les électrovannes 16 sont dans une position conforme à celle décrite dans le cycle 2. Le dispositif 11 de production d'air sous pression fonctionne sans interruption pendant 24 à 48 heures pour provoquer un assèchement du lisier jusqu'à obtenir un taux de matière sèche voisin de 40 %. Un nouveau cycle peut alors commencer. Au cours de ce cycle, on tentera de maintenir la température proche de 55°C de manière à obtenir une stérilisation des déchets. Cette température doit être maintenue pendant au moins 15 jours. En règle générale, la température sera maintenue entre 55 et 70°C. Dans ce cas, le fonctionnement du dispositif 11 de production d'air sous pression est asservi à la température. L'injection d'air pourra s'effectuer toutes les heures ou toutes les demi-heures en fonction de la température. Le fonctionnement du dispositif sera interrompu lorsque la température dépassera 70°C. En effet, il doit être précisé que plus on injecte de l'air, plus on augmente la température en augmentant le processus de fermentation. Pour éviter la formation de chemin d'air privilégiés dans le tas de matière à traiter, on peut, au cours de ce cycle, ouvrir alternativement ou sélectivement l'une quelconque des électrovannes 16 positionnées au voisinage du dispositif 11 de production d'air sous pression.

Dans un autre mode de réalisation de l'invention, destiné plus particulièrement au traitement de déchets organiques présentant un taux de matière sèche supérieur à celui du lisier, le ou chaque conduit 6 longitudinal loge un conduit apte à être alimenté en air sous pression par le dispositif 11 de production d'air sous pression. Ce conduit est muni d'ouvertures, telles que des perforations ou des fentes, dont au moins une partie sont orientées en direction de la paroi de fond 2 du bac, notamment pour libérer l'air sous pression introduit dans le conduit à partir du dispositif 11 de production d'air sous pression. Dans ce cas, à nouveau, chaque conduit perforé est introduit à coulissement dans le conduit 6 longitudinal ménagé dans le fond du bac en l'enfilant dans ledit conduit 6 longitudinal de manière à assurer une continuité d'un module à un autre. Ce conduit perforé est ensuite raccordé à une de ses extrémités au dispositif 11 de production d'air sous pression et comporte, à ou au voisinage de chacune de ses extrémités, un organe 16 d'obturation, sélectivement activable, tel qu'une électrovanne. Le fonctionnement des électrovannes 16 peut être conforme à celui décrit ci-dessus. Un tel conduit sera dans ce cas généralement utilisé uniquement comme vecteur d'air et non comme collecteur de liquides.

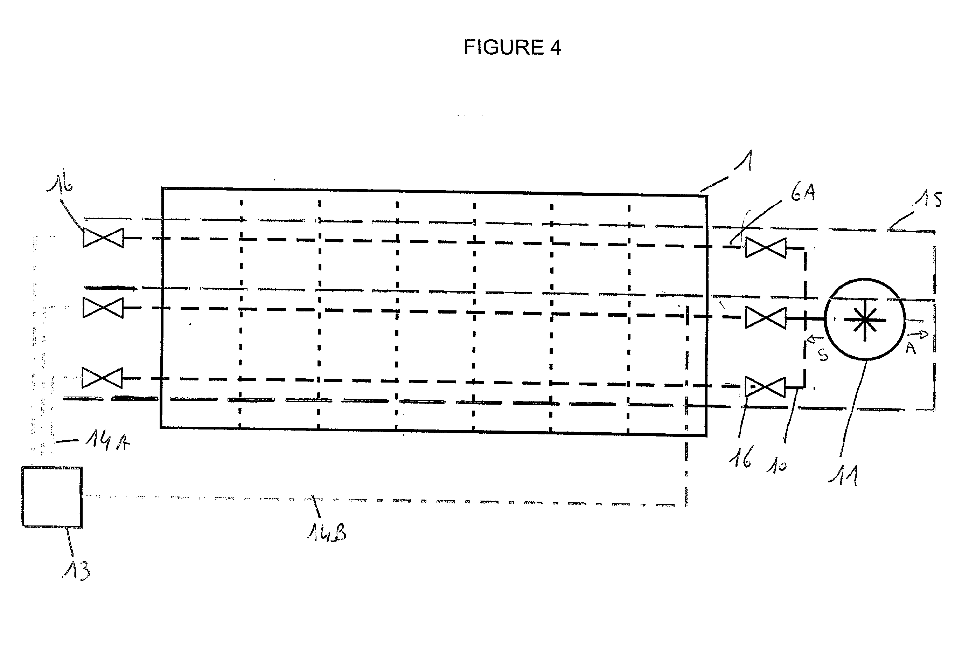

Généralement, les installations destinées au traitement de fumier sont fermées au moyen d'un élément de couverture, tel qu'une toiture ou une bâche. En effet, la matière à traiter constituée de déchets organiques additionnés de composés carbonés est introduite à l'intérieur des bacs par un simple épandeur à fumier généralement présent sur les sites de production de fumier. L'installation est ensuite recouverte d'une bâche isolant complètement la composition introduite dans le bac des conditions extérieures. A cet effet, chaque module comporte, sur les faces extérieures de ses parois 3 latérales, des moyens de fixation d'une bâche. Ces moyens de fixation peuvent être constitués par des crochets positionnés à différentes hauteurs sur les faces extérieures des parois 3 latérales du module. L'installation est ensuite raccordée par l'intermédiaire des conduits perforés au dispositif d'air sous pression. Le traitement par aération forcée consistant en une aération par le dessous de la composition à traiter peut alors débuter. On constate que les micro-organismes sont aptes à dégrader la matière organique en six à huit semaines pour permettre la production d'un amendement de sol pouvant encore être appelé compost ou fertilisant en un temps record. Toutefois, on constate, au cours de cette fermentation, le dégagement d'humidité ou de gaz sous la bâche entre le sommet du tas de déchets et la bâche. Pour éviter une accumulation de ces gaz et supprimer le développement d'humidité, le dispositif 11 de production d'air sous pression comporte au moins deux modes de fonctionnement fonctions du sens de circulation de l'air à l'intérieur du dispositif. En effet, le dispositif 11 de production d'air présente une possibilité d'inversion du sens de circulation d'air. Ce dispositif est ainsi raccordé d'une part à chaque conduit 6 longitudinal ou à un conduit intérieur poreux dudit conduit, d'autre part à au moins un drain 15 destiné à venir se positionner sur le tas de déchets à traiter de manière à permettre, dans un premier mode de fonctionnement dit par aspiration (flèche A figure 4), l'élimination de l'humidité et des gaz accumulés sous l'élément de couverture du bac et, dans un second mode de fonctionnement dit par soufflage (flèche S figure 4), l'alimentation en air des déchets en vue de provoquer notamment une fermentation de ces derniers. Ainsi, dans un premier cycle, l'électrovanne 16 du conduit raccordé au dispositif 11 de production d'air sous pression positionnée au voisinage de l'extrémité libre de ce conduit est fermée tandis que l'électrovanne 16 positionnée au voisinage du dispositif 11 de production d'air sous pression est ouverte. Le sens de rotation du dispositif 11 de production d'air sous pression, imposant le sens de circulation d'air, est choisi de manière telle que l'air est aspiré à travers le tas de déchets par le conduit 6A ou 6 disposé sous le tas et est refoulé à l'intérieur du drain 15 supérieur pour pouvoir être évacué à l'extérieur. Au cours de ce fonctionnement, l'air circulant à l'intérieur du drain 15 supérieur joue le rôle d'entraînement des gaz et de l'humidité présente sous la bâche. Dans un deuxième cycle, on inverse le sens de fonctionnement du dispositif 11 de production d'air sous pression. L'air est alors aspiré à travers le drain 15 pour venir alimenter le conduit 6 ou 6A positionné sous le tas de matières à traiter. Ces cycles sont ainsi répétés plusieurs fois. A nouveau, on peut asservir, au cours du cycle d'alimentation en air du tas de déchets le fonctionnement du dispositif 11 de production d'air sous pression à la température.

Pour parfaire cette installation, le drain 15 supérieur peut encore loger un conduit de circulation de fluide de type goutte à goutte alimenté en fluide par le reste de l'installation. En effet, dans le cas de fumier trop humide, avec un taux d'humidité voisin de 30 à 35 %, les jus, issus des différents cycles précédents, sont récupérés dans un collecteur 13 relié par une conduite 14A à une extrémité du conduit 6A d'alimentation en air du tas de fumier et peuvent être, au moyen d'une pompe de relevage et d'une conduite 14B, réintroduits dans le conduit de type goutte à goutte logé à l'intérieur du drain 15 supérieur.

L'installation décrite ci-dessus peut donc comporter plusieurs modes de réalisation. Dans le mode de réalisation le plus simple et non préféré, les conduits 6 ou canaux ménagés dans le fond du bac et formant un ensemble monobloc avec ce dernier sont directement raccordés à un dispositif 11 de production d'air sous pression. Ainsi, dans le cas où le conduit 6 longitudinal est raccordé directement au dispositif 11 de production d'air sous pression, le module présente, au droit des extrémités des conduits 6 d'injection d'air, une cavité annulaire (non représentée) pour le logement d'un raccord de type manchonné à un conduit 6 d'injection d'un module voisin pour assurer, dans un ensemble de modules, la continuité de distribution d'air injecté, comme l'illustre la figure 3. Ces raccords pourront être introduits après démoulage de chaque module, un insert ayant occupé, au cours de l'opération de moulage, la place destinée à être occupée ultérieurement par le raccord.

Ainsi, en résumé, dans un premier mode de réalisation, chaque conduit 6 longitudinal loge un conduit muni d'ouvertures, telles que des perforations ou des fentes, dont au moins une partie sont orientées en direction de la paroi de fond 2 du module, ce conduit, simplement enfilé à l'intérieur du conduit 6, est raccordé à une de ses extrémités au dispositif 11 de production d'air sous pression.

Dans un second mode de réalisation, ce conduit se présente sous forme d'un drain 6A filtrant apte à être alimenté en air sous pression par le dispositif 11 de production d'air sous pression, ce drain 6A servant indifféremment de conduit d'écoulement généralement gravitaire des liquides, tels que des jus, issus des déchets organiques à traiter, ou de conduit de circulation d'air sous pression.

Ces différents modes de réalisation de l'invention sont fonctions des déchets à traiter. Dans tous les cas, le nettoyage d'une telle installation s'avère particulièrement aisé de même que la mise en place d'une telle installation.

Il est également possible de prévoir un dispositif 11 de production d'air sous pression dont le sens de fonctionnement peut être inversé de manière à pouvoir permettre l'évacuation des gaz ou de l'humidité s'accumulant sous la bâche lorsque l'élément de couverture du module est constitué d'une bâche.

La conception de l'installation permet de s'affranchir totalement des conditions extérieures et permet de contrôler les principaux paramètres de dégradation de la matière organique. Avec un mélange optimisé de déchets, le temps de fermentation diminue à deux mois. La réalisation sous forme d'éléments modulaires permet à l'installation de se prêter aisément à un déplacement pour permettre un traitement sur plusieurs sites. Une telle installation nécessite peu de manipulation et peu de matériel pour la fabrication de compost ou amendement et n'exige aucun consommable pour produire un compost de qualité régulière. Ces amendements ou composts sont principalement destinés à la valorisation agricole, horticole et maraîchère. Ils seront généralement répandus sur des parcelles cultivées. On constate qu'un compost obtenu au moyen d'une telle installation est plus concentré en éléments fertilisants utilisables que le fumier de départ essentiellement en ce qui concerne le phosphore, la potasse et l'azote. On considère ainsi que pour une même composition initiale de fumier, il faut apporter deux fois moins de compost que de fumier frais. Les éléments minéraux sont quant à eux présents essentiellement sous forme organique plus ou moins complexe. La fermentation aérobie a pour effet d'intégrer les éléments minéraux dans des molécules organiques et de complexer encore les molécules existantes. La libération des éléments fertilisants sera donc progressive dans le temps, plus encore que pour les fumiers bruts. En outre, les produits obtenus ne posent pas de problème de mauvaises odeurs.

Il est à noter que de nombreux paramètres peuvent être contrôlés, tels que l'humidité, la quantité de matière carbonée ajoutée, mais également la température de l'installation. Il est ainsi possible d'asservir le débit d'air sous pression introduit à l'intérieur de l'installation à la température régnant à l'intérieur de l'installation une fois les modules recouverts d'une bâche ou d'un élément de couverture quelconque. Il en résulte la possibilité de confirmer la stérilisation de l'installation puisque l'on sait que, lorsque la température a été maintenue au-delà de 55°C pendant au moins quinze jours, on peut considérer le fumier comme stérile. De la même manière, la conception des conduits avec présence d'éléments d'obturation sélectivement obturables permet de créer des trajectoires de flux d'air variables et ainsi éviter la formation de courants d'air privilégiés à l'intérieur de l'installation.

## Revendications

1. Module pour la réalisation d'une installation de traitement de déchets organiques, tels que lisier, déchet de litière, fumier, par fermentation aérobie en vue de la production notamment de fertilisant ou d'amendement des sols,
**caractérisé en ce que** le module affecte la forme d'un bac (1) préfabriqué à extrémités (5) ouvertes dont le fond (2) est muni d'au moins un, de préférence une pluralité de, conduits (6) longitudinaux débouchant respectivement à la surface intérieure de la paroi de fond (2) du bac (1) sous forme d'une fente (12) longitudinale continue pour libérer de l'air sous pression introduit dans les conduits (6) à partir d'un dispositif (10, 11) de production d'air sous pression.

2. Module selon la revendication 1,
**caractérisé en ce que** le ou chaque conduit (6) longitudinal loge un conduit apte à être alimenté en air sous pression par le dispositif (11) de production d'air sous pression, ce conduit étant muni d'ouvertures telles que des perforations ou des fentes, dont au moins une partie sont orientées en direction de la paroi de fond (2) du bac (1), notamment pour libérer l'air sous pression introduit dans le conduit à partir du dispositif (11) de production d'air sous pression.

3. Module selon la revendication 2,
**caractérisé en ce que** chaque conduit logé à l'intérieur d'un conduit (6) longitudinal constitue un drain (6A) filtrant apte à être alimenté en air sous pression par le dispositif (11) de production d'air sous pression, ce drain (6A) servant indifféremment de conduit d'écoulement généralement gravitaire des liquides, tels que des jus, issus des déchets organiques à traiter, ou de conduit de circulation d'air sous pression.

4. Module selon la revendication 3,
**caractérisé en ce que** le drain (6A) affecte la forme d'un élément tubulaire formé par enroulement hélicoïdal d'un fil généralement métallique sur une armature, la zone entre spires de l'enroulement correspondant d'une part à la zone de filtration du drain, d'autre part à la zone de passage d'air.

5. Module selon la revendication 3,
**caractérisé en ce que** le drain affecte la forme d'un élément tubulaire formé d'une pluralité d'anneaux métalliques maintenus alignés par une armature, la zone entre anneaux correspondant d'une part à la zone de filtration du drain, d'autre part à la zone de passage d'air.

6. Module selon l'une des revendications 1 à 5,
**caractérisé en ce que** le fond (2) du bac est jouxté de parois (3) latérales, les parois (3) latérales du module étant inclinées, par rapport à la paroi de fond (2), d'un angle compris dans la plage [100 - 150] degrés pour autoriser un gerbage des modules similaires ou identiques.

7. Module selon l'une des revendications 1 à 6,
**caractérisé en ce que** le fond (2) du bac est jouxté de parois (3) latérales, les parois (3) latérales étant munies d'éléments (9) de serrage pour l'assemblage de deux modules contigus.

8. Module selon l'une des revendications 1 à 7,
**caractérisé en ce que** le bac (1) comporte, sur des parois (3) latérales jouxtant sa face formant fond (2), des moyens de fixation d'une bâche.

9. Module selon l'une des revendications 1 à 8,
**caractérisé en ce que** les chants (4A, 4B) d'extrémité du fond (2) du bac (1) aptes à former un plan de joint à l'état assemblé de deux modules contigus présentent, d'une extrémité à une autre, un profil géométrique complémentaire autorisant un assemblage par engagement positif de formes géométriques complémentaires.

10. Module selon la revendication 1,
**caractérisé en ce qu'**il présente, au droit des extrémités des conduits (6) d'injection d'air, une cavité annulaire pour le logement d'un raccord de type manchonné à un conduit (6) d'injection d'un module voisin pour assurer, dans un ensemble de modules, la continuité de distribution d'air injecté.

11. Module selon l'une des revendications 1 à 10,
**caractérisé en ce que** chaque conduit (6) longitudinal est muni intérieurement d'un revêtement en matière synthétique constitué d'un insert perdu lors de la fabrication par moulage du bac (1).

12. Installation pour le traitement de déchets organiques, tels que lisier, déchet de litière, fumier, par fermentation aérobie en vue de la production notamment de fertilisant ou d'amendement des sols,
**caractérisée en ce qu'**elle est constituée au moins d'un module conforme à l'une des revendications 1 à 11 et d'un dispositif (11) de production d'air sous pression.

13. Installation pour le traitement de déchets organiques, tels que lisier, déchet de litière, fumier, par fermentation aérobie en vue de la production notamment de fertilisant ou d'amendement des sols,
**caractérisée en ce qu'**elle est constituée au moins par assemblage d'une pluralité de modules conformes à l'une des revendications 1 à 11, le ou les conduits (6) longitudinaux de chaque module étant alignés avec le ou les conduits (6) longitudinaux de module(s) adjacent(s) pour former une continuité du ou des conduits (6) longitudinaux dans un ensemble de modules et assurer, dans un ensemble de modules, la continuité de distribution d'air injecté par un dispositif (11) de production d'air sous pression.

14. Installation pour le traitement de déchets organiques selon l'une des revendications 12 et 13,
**caractérisée en ce que** chaque conduit (6) longitudinal loge un drain (6A) filtrant apte à être alimenté en air sous pression par le dispositif (11) de production d'air sous pression, ce drain (6A) servant indifféremment de conduit d'écoulement, généralement gravitaire de liquides tels que des jus issus des déchets, et de conduit de circulation d'air sous pression.

15. Installation pour le traitement de déchets organiques selon la revendication 14,
**caractérisée en ce que** le drain (6A) est muni, à ou au voisinage de chacune de ses extrémités, d'organes (16) d'obturation, tels que des électrovannes, sélectivement activables.

16. Installation pour le traitement de déchets organiques selon l'une des revendications 14 et 15,
**caractérisée en ce que** le drain (6A) est raccordé à une de ses extrémités au dispositif (11) de production d'air sous pression et, à son autre extrémité, à un bac (13) de collecte des jus.

17. Installation pour le traitement de déchets organiques selon l'une des revendications 12 et 13,
**caractérisée en ce que** chaque conduit (6) longitudinal loge un conduit muni d'ouvertures, telles que des perforations ou des fentes, dont au moins une partie sont orientées en direction de la paroi de fond (2) du module, ce conduit étant raccordé à une de ses extrémités au dispositif de production d'air sous pression et comportant, à ou au voisinage de chacune de ses extrémités, un organe d'obturation sélectivement activable, tel qu'une électrovanne.

18. Installation pour le traitement de déchets organiques selon l'une des revendications 12 à 17,
**caractérisée en ce que** l'installation est fermée au moyen d'un élément de couverture, tel qu'une toiture ou une bâche.

19. Installation pour le traitement de déchets organiques selon l'une des revendications 12 à 18,
**caractérisée en ce que** le dispositif (11) de production d'air sous pression comporte au moins deux modes de fonctionnement fonction du sens de circulation de l'air à l'intérieur du dispositif, ce dispositif étant raccordé d'une part à chaque conduit (6) longitudinal ou à un conduit (6A) intérieur poreux dudit conduit (6), d'autre part à au moins un drain (15) destiné à venir se positionner sur le tas de déchets à traiter de manière à permettre, dans un premier mode de fonctionnement dit par aspiration, l'élimination de l'humidité et des gaz accumulés notamment sous l'élément de couverture du bac et, dans un second mode de fonctionnement dit par soufflage, l'alimentation en air des déchets en vue de provoquer notamment une fermentation de ces derniers.

20. Installation pour le traitement de déchets organiques selon la revendication 19,
**caractérisée en ce que** le drain (15) loge un conduit de circulation de fluide de type goutte à goutte alimenté en fluide par le reste de l'installation.

21. Installation pour le traitement de déchets organiques selon l'une des revendications 12 à 20,
**caractérisée en ce qu'**elle comporte une unité de pilotage commandant le fonctionnement du dispositif (11) de production d'air sous pression et éventuellement le fonctionnement d'organes (16) d'obturation.

22. Installation pour le traitement de déchets organiques selon la revendication 21,
**caractérisée en ce qu'**elle comporte au moins une sonde de température, l'unité de pilotage asservissant le fonctionnement du dispositif (11) de production d'air sous pression à la température.

23. Procédé de fabrication d'un module conforme à l'une des revendications 1 à 11, ce module affectant la forme d'un bac (1) à extrémités (5) ouvertes,
**caractérisé en ce qu'**on dispose des conduits en fond d'un moule correspondant à la forme du bac de module à réaliser, **en ce que** l'on enrobe partiellement lesdits conduits de la matière constitutive du bac, telle que du béton, **en ce qu'**on arase, après démoulage, les conduits en leur partie débordante de la face formant fond (2) du bac (1) pour obtenir une fente longitudinale continue.
